# EUROPÄISCHE PATENTSCHRIFT

(11) **EP 0 563 752 B1**
(45) Veröffentlichungstag und Bekanntmachung des Hinweises auf die Patenterteilung: **24.07.1996**
(21) Anmeldenummer: 93104742.7
(22) Anmeldetag: 23.03.1993
(51) Int. Cl.: F24D 19/10

(54) **Verfahren zur Optimierung der Brennerlaufzeiten und der Anzahl der Brennerstarts je Zeiteinheit in einer Heizungsanlage**
Method of optimizing the running times of a burner and the number of burner-starts per unit of time in a heating installation
Procédé pour l'optimisation des durées de fonctionnement d'un brûleur et du nombre d'allumages d'un brûleur par unité de temps dans une installation de chauffage

(30) Priorität: 03.04.1992 DE 4211204
(43) Veröffentlichungstag der Anmeldung: 06.10.1993
(73) Patentinhaber: Buderus Heiztechnik GmbH, D-35576 Wetzlar (DE)
(72) Erfinder: Abel, Helmut, W-6301 Staufenberg (DE); Klein, Rudolf, W-6304 Lollar (DE)

(56) Entgegenhaltungen:
- GB-A- 2 090 023

## Beschreibung

Die Erfindung betrifft ein Verfahren nach dem Oberbegriff des Patentanspruches 1.

Es ist bekannt, daß sich die Brennerlaufzeiten und die Anzahl der Brennerstarts je Zeiteinheit auf die Umweltbelastung und auf den Energieverbrauch auswirken. Kurze und häufige Brennerlaufzeiten bringen infolge der Anfahremissionen einen erhöhten Ausstoß an umweltschädlichen Verbrennungsprodukten. Auch der Energieverbrauch ist in der Startphase des Brenners besonders hoch. Bei Heizungsanlagen, die im Niedertemperaturbereich betrieben werden, kommen diese Probleme besonders zum Tragen, da in dieser Betriebsphase nur ein geringer Wärmebedarf vorhanden ist.

In der DE 25 49 561 C3 wird ein Verfahren zur Regelung einer Heizungsanlage beschrieben, bei dem die Schaltdifferenz, d.h. die Differenz zwischen der Ein- und Ausschalttemperatur des Brenners, automatisch zu unteren Leistungsbereichen hin vergrößert wird. Die Vergrößerung der Schaltdifferenz führt zwangsweise zu einer Verlängerung der Brennerlaufzeiten und zu einer Verringerung der Brennerstarts je Zeiteinheit, speziell in den kritischen, unteren Leistungsbereichen. Es handelt sich um eine entscheidende Lösung des anstehenden Problemes.

Der Erfindung lag die Aufgabe zugrunde, ergänzend zu vorstehend genannter Lösung, aber auch unabhängig von dieser, ein Verfahren zur Optimierung der Brennerlaufzeiten und der Anzahl der Brennerstarts je Zeiteinheit zu schaffen, welches einer größtmöglichen Umweltschonung und Energieersparnis dient.

Die erfindungsgemäße Lösung besteht in der Anwendung der im Patentanspruch 1 genannten Maßnahme.

Mit Absicht wird der Heizwasservolumenstrom in jeder Phase auf den geringstmöglichen Wert eingestellt. Dadurch wird nicht nur Energie gespart. Der Brenner muß auch seltener starten.

Reduzierungen des Heizwasservolumenstromes sind an sich aus den unterschiedlichsten Gründen bekannt. So beschreibt die DE 38 13 825 A1 eine Regelung, bei der nach dem Durchfahren des Taupunktbereiches mit anfangs ausgeschalteter Umwälzpumpe zunächst eine geringe Förderleistung der Umwälzpumpe eingestellt wird. Mit steigender Kesselwassertemperatur steigt die Förderleistung bis zum Höchstwert an. Es handelt sich hierbei um eine temperaturabhängige Veränderung der Förderleistung und damit des Heizwasservolumenstromes. Es geht jedoch nicht um die Lösung der hier vorliegenden Aufgabe mit dem angegebenen Mittel.

Die nicht vorveröffentlichte P 41 18 799 beschreibt ebenfalls ein solches Verfahren, bei dem der Heizwasservolumenstrom zur Vermeidung von Strömungsgeräuschen bei gedrosselten Heizkörperventilen verringert werden soll. Die Steuerung der Umwälzpumpe erfolgt dabei über den Kesseltemperaturgradienten. Auch hier ist nicht die vorgenannte Aufgabenstellung und die konkrete Lösung angesprochen.

Schließlich wird auch die DE 38 20 429 C2 genannt. Die Umwälzpumpe soll bei dem dort beschriebenen Verfahren in der Startphase des Brenners im Reduktionsbetrieb arbeiten und ab dem Überschreiten einer Heizkesselminimaltemperatur auf der Höhe des Taupunktes auf Vollbetrieb geschaltet werden. An ein grundsätzliches Reduzieren des Heizwasservolumenstromes auf den geringstmöglichen Wert im Interesse einer größtmöglichen Umweltschonung und Energieersparnis war nicht gedacht.

Die Reduzierung des Heizwasservolumenstromes in der Stillstandsphase des Brenners wurde von der Wärmespeicherkapazität des Wärmeerzeugers abhängig gemacht. Je niedriger diese liegt, um so geringer ist der Heizwasservolumenstrom. Bei einem Durchlauferhitzer als Wärmeerzeuger mit sehr niedriger Wärmespeicherkapazität empfiehlt sich beispielsweise eine Reduzierung auf 5 % der Nennwassermenge. Bei Heizkesseln mit durchschnittlicher Wärmespeicherkapazität ist eine Absenkung des Heizwasservolumenstromes auf etwa 1/4 bis 1/3 der Nennwassermenge sinnvoll. Diese Werte können fest eingestellt werden. Es ist auch möglich, die Werte von der jeweiligen Außentemperatur und/oder der jeweiligen Wärmebelastung des Heizkessels und/oder von der momentanen Schalthysterese abhängig zu machen. Versuche haben gezeigt, daß mit dieser einfachen Maßnahme nur in der Stillstandsphase des Brenners die Schalthäufigkeit des Brenners um den Faktor 2-3 reduziert werden kann.

In der Laufphase des Brenners besteht die wesentliche Forderung darin, daß sich vor dem Ausschalten des Brenners jedenfalls eine Abflachung der ansteigenden Kesselwasser-Temperaturkurve in einem Temperatur-Zeit-Diagramm einstellt. Das ist das Erkennungsmerkmal, daß jetzt das gesamte im Umlauf befindliche Heizwasser aufgeheizt wird. Erst wenn das gesamte Wasser in der Anlage aufgeheizt ist, geht die Abflachung wieder in eine ansteigende Kurve über, so daß bei Erreichen des gewünschten Temperaturwertes der Brenner abgeschaltet werden kann. Die längere Brennerlaufzeit ist also die Folge davon, daß das vollständige Wasservolumen in der Anlage als Wärmepuffer genutzt ist. Da auch der Abbau des gespeicherten Wärmepotentials durch den niedrigen Heizwasservolumenstrom in der Stillstandsphase des Brenners wieder entsprechend lange dauert, wird die gestellte Aufgabe, nämlich lange Brennerlaufzeiten und wenig Brennerstarts je Zeiteinheit, gelöst.

Wichtig ist, daß die Abflachung der Kesselwasser-Temperaturkurve immer erzielt und voll ausgenutzt wird. Nur so kann das Wasservolumen in der Anlage voll als Wärmepuffer dienen. Möglich wird dieses durch ein entsprechend starkes Verringern des Heizwasservolumenstromes. Auch ein entsprechendes Anheben der Ausschalttemperatur des Brenners führt zu diesem Ziel. Beide Maßnahmen können automatisch vom Regler durchgeführt werden.

Die erfindungsgemäße Verringerung des Heizwasservolumenstromes könnte eine nicht mehr ausreichende Wärmeversorgung zur Folge haben. Dem kann durch ein Anheben der Ein- und/oder Ausschalttemperatur des Brenners oder auch durch ein bewußtes unterschiedliches Anheben des Heizwasservolumenstromes in sowohl der Ein- als auch in der Ausphase des Brenners begegnet werden. Auf diese Weise kann die festgelegte Sollvorlauftemperatur bzw. Sollbelastung eingehalten werden. Komforteinbußen sind dadurch ausgeschlossen.

Bei geringer Belastung, etwa bei hohen Außentemperaturen, und der Einhaltung einer Mindestausschalttemperatur können stark schwankende Raumtemperaturen auftreten. Um dieses zu vermeiden, ist als zusätzliche Maßnahme die Festlegung einer Mindestanzahl an Brennerstarts je Zeiteinheit, z.B. Brennerstarts je Stunde, zu empfehlen.

Bei analog geregelten Heizungsanlagen kann die Volumenstromeinstellung in Abhängigkeit von der Außentemperatur und/oder der Belastung vorgenommen werden. Dabei sollten die Volumenstromkennlinien der Heizungsanlage angepaßt werden. So können bei großen Schalthysteresen die Volumenströme geringer sein als bei kleinen Hysteresen. Bei Überschreiten einer bestimmten Kesselwassertemperatur infolge abfallender Außentemperaturen ergeben sich von selbst längere Brennerlaufzeiten. Eine Verringerung des Volumenstromes während der Laufphase des Brenners kann dann enfallen. Bei Heizkesseln, die mit konstant hoher Temperatur betrieben werden, ist nur noch die Volumenstromverringerung während der Stillstandsphase des Brenners anzuwenden.

Die Reduzierung des Volumenstromes ist durch eine entsprechende Steuerung der Umwälzpumpe (z.B. variables Puls-Pausen-Verhältnis, Phasenausschnittssteuerung, Frequenzenveränderung, Spannungsverringerung, vorgegebene Schaltstufen) oder von Stellgliedern (Verstellen von Ventilen oder Mischern) möglich.

Die beigefügte Zeichnung stellt in zwei Diagrammen die Funktionsweise der erfindungsgemäßen Regelung dar. Es zeigt:
Fig. 1:Den Temperaturverlauf bei der bisher üblichen Regelung und
Fig. 2:Den Temperaturverlauf bei der erfindungsgemäßen Regelung.

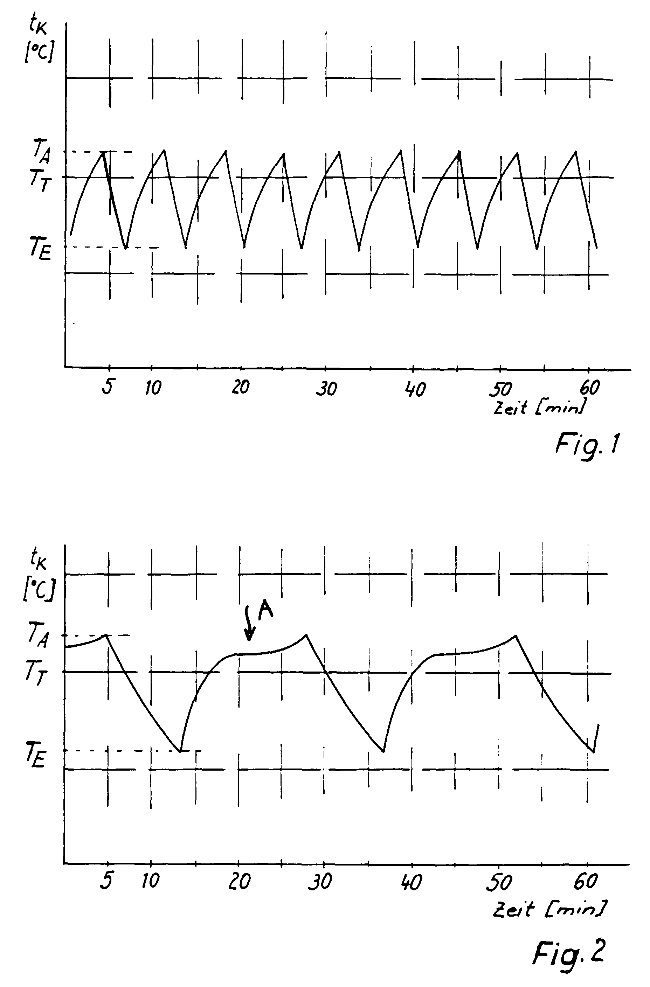

Bei der üblichen Regelung nach Fig.1 ergibt sich ab dem Brennerstart bei der Einschalttemperatur T_{E} ein schneller Temperturanstieg. Das ist bis zum Erreichen des Taupunktes T_{T} erwünscht und wird durch ein Ausschalten bzw. Drosseln der Umwälzpumpe auch bewußt angestrebt.

Die in Abhängigkeit von der Außentemperatur bwz. der geforderten Leistung eingestellte Ausschalttemperatur T_{A} ist schnell erreicht. Der Brenner schaltet wieder ab. Infolge des üblichen, vollen Heizwasservolumenstromes bei voller Leistung der Umwälzpumpe ergibt sich wieder eine recht schnelle Abkühlung des Kesselwassers, was dann wieder zum nächsten Brennerstart führt. Im dargestellten Beispiel, das tatsächliche Meßergebnisse wiedergibt, handelt es sich um mehr als 9 Brennerstarts je Stunde mit sehr kurzen Brennerlaufzeiten.

Im Gegensatz dazu steigt die Kesselwassertemperatur bei der erfindungsgemäßen Regelung nach Fig. 2 ab dem Brennerstart ebenfalls sehr schnell an, weil zunächst das eigentliche Kesselwasser erwärmt wird. Nach dem Überschreiten des Taupunktes T_{T} bildet sich eine Abflachung A aus, die sich aus dem durch die Volumenstromreduzierung während der Brennerstillstandsphase resultierenden kälteren Heizungsrücklaufwassers ergibt. Erst wenn ein großer Teil des Wasservolumens der Heizkörper ausgetauscht ist, ergibt sich eine gleichmäßige langsame Erwärmung des gesamten im Umlauf befindlichen Heizungswassers.

Das gesamte Umlaufwasser dient dabei als Wärmespeicher. Die Abschaltung des Brenners erfolgt erst dann, wenn die Temperaturkurve erneut deutlich ansteigt. Das ist notfalls durch ein Anheben der Einschalttempertur T_{E} und/oder der Ausschalttemperatur T_{A} über den von der Außentemperatur her festgelegten Wert zu erreichen und kann automatisch vom Regler durchgeführt werden.

Die erhebliche Volumenstromreduzierung in der Stillstandsphase des Brenners bewirkt im Heizkörper durch die längere Verweildauer der Wasserteilchen ein Auskühlen auf niedrigere Temperaturen. Zusätzlich wird der Wasserinhalt des Heizkessels wesentlich langsamer ausgetauscht, so daß der Kesselvorlauftemperaturfühler seinen Einschaltpunkt erst nach einer längeren Zeit erreicht. Beide Effekte zusammen ergeben eine längere Brennerstillstandszeit und nach dem Einschalten des Brenners eine längere Laufzeit, da daß kältere Heizungsrücklaufwasser bis zum Ausschaltlevel aufgeheizt werden muß.

Im dargestellten Fall sind durch die einfache Maßnahme die Brennerstarts auf 2 - 3 je Stunde verringert.

Die Erfindung ist sowohl bei einer Heizungsanlage ohne Mischer als auch bei einer solchen mit einem eingebauten Mischer anzuwenden. Entscheidend ist die erfindungsgemäße Pumpensteuerung während der Laufphase und/oder der Stillstandsphase des Brenners.

## Patentansprüche

1. Verfahren zur Optimierung der Brennerlaufzeiten und der Anzahl der Brennerstarts je Zeiteinheit in einer Heizungsanlage mit einer Umwälzpumpe im Heizkreis zwischen einem Wärmeerzeuger und mindestens einem Heizkörper durch Absenken des Heizwasservolumenstromes in der Stillstandsphase des Brenners,
dadurch gekennzeichnet, daß der Heizwasservolumenstrom bei einem Durchlauferhitzer mit sehr niedriger Wärmespeicherkapazität auf einen Wert von etwa 5 % der Nennwassermenge und bei einem Heizkessel mit durchschnittlicher Wärmespeicherkapazität auf einen Wert zwischen 1/4 und 1/3 der Nennwassermenge reduziert und/oder in der Laufphase des Brenners auf derartige Werte abgesenkt wird, daß vor dem Ausschalten des Brenners jedenfalls eine Abflachung der ansteigenden Kesselwasser-Temperaturkurve in einem Temperatur-Zeit-Diagramm mit einem anschließenden weiteren Anstieg erfolgt.

2. Verfahren nach Anspruch 1,
dadurch gekennzeichnet, daß die entsprechenden Werte fest eingestellt werden.

3. Verfahren nach den Anspruch 1,
dadurch gekennzeichnet, daß die entsprechenden Werte in Abhängigkeit von der momentanen Außentemperatur und/oder der momentanen Wärmebelastung des Heizkessels und/oder der Schalthysterese des Brenners veränderlich sind.

4. Verfahren nach Anspruch 1,
dadurch gekennzeichnet, daß die Abflachung der Temperaturkurve in der Laufphase des Brenners durch ein entsprechend starkes Verringern des Heizwasservolumenstromes und/oder durch ein entsprechendes Anheben der Ausschalttemperatur garantiert wird.

5. Verfahren nach Anspruch 1,
dadurch gekennzeichnet, daß bei nicht mehr ausreichender Wärmeversorgung infolge des verringerten Heizwasservolumenstromes zum Erzielen der vorgegebenen Sollvorlauftemperatur oder der Sollbelastung die Ein- und/oder Ausschalttemperatur des Brenners oder in der Endphase des Brennerlaufes der Heizwasservolumenstrom über den eingestellten Wert hinaus angehoben wird.

6. Verfahren nach Anspruch 1,
dadurch gekennzeichnet, daß über eine gesonderte Schaltung eine Mindestanzahl an Brennerstarts je Zeiteinheit eingehalten wird.

7. Verfahren nach Anspruch 1,
dadurch gekennzeichnet, daß die Einstellung des Heizwasservolumenstromes durch eine Steuerung der Umwälzpumpe und/oder von Stellgliedern in der Heizungsanlage erfolgt.

## Claims

1. A method for optimizing the running times of a burner and the number of burner-starts per unit of time in a heating installation, comprising a circulating pump between a heat producer and at least one radiator, by lowering the volumetric flow of heating water in the period of disuse of the burner, characterized by that the volumetric flow of heating water for a continuous flow heater having a very low heat storage capacity is reduced to a value of 5 % of the rated water amount and for a boiler having an average heat storage capacity to a value of 1/4 to 1/3 of the rated water amount, and/or during the running period of the burner to such values that prior to the disconnection of the burner at any case a flattening of the rising boiler water temperature curve in a temperature/time diagram with a subsequent further increase is effected.

2. A method according to claim 1, characterized by that the corresponding values are fixedly set.

3. A method according to claim 1, characterized by that the corresponding values are set as a function of the actual outside temperature and/or the actual heat loading of the boiler and/or the switching hysteresis of the burner.

4. A method according to claim 1, characterized by that the flattening of the temperature curve in the running period of the burner is guaranteed by a correspondingly large reduction of the volumetric flow of heating water and/or by a corresponding increase of the disconnection temperature and/or by a corresponding increase of the disconnection temperature.

5. A method according to claim 1, characterized by that for a heat supply not being sufficient anymore due to the reduced volumetric flow of heating water for obtaining the given desired inflow temperature or the desired load, the connection and/or disconnection temperature of the burner or in the final period of the burner run the volumetric flow of heating water is increased over the set value.

6. A method according to claim 1, characterized by that a minimum number of burner-starts per unit of time is maintained by a separate circuit.

7. A method according to claim 1, characterized by that the setting of the volumetric flow of heating water is effected by controlling the circulating pump and/or control elements in the heating installation.

## Revendications

1. Procédé pour l'optimisation des durées de fonctionnement d'un brûleur et du nombre d'allumages d'un brûleur par unité de temps dans une installation de chauffage, comprenant une pompe de circulation dans le circuit de chauffage entre un générateur de chaleur et au moins un radiateur par abaissement du courant volumétrique de l'eau de chauffage dans la phase d'arrêt du brûleur,
caractérisé en ce que le courant volumétrique de l'eau de chauffage avec un chauffe-eau instantané d'une capacité très faible d'accumulation de chaleur est réduit à une valeur d'environ 5 % de la quantité nominale d'eau et pour une chaudière de chauffage avec une capacité moyenne d'accumulation de chaleur à une valeur entre 1/4 et 1/3 de la quantité nominale d'eau et/ou est réduit dans la phase de fonctionnement du brûleur à de telles valeurs, qu'avant la mise hors marche du brûleur en tout cas un aplatissement de la courbe de température montante de l'eau de la chaudière en un diagramme température / temps avec une augmentation additionnelle suivante soit effectué.

2. Procédé selon la revendication 1,
caractérisé en ce que les valeurs correspondantes sont fixement ajustées.

3. Procédé selon la revendication 1,
caractérisé en ce que les valeurs correspondantes sont variables en dépendence de la température extérieure instantanée et/ou de la charge thermique instantanée de la chaudière et/ou la hystérésis de commutation du brûleur.

4. Procédé selon la revendication 1,
caractérisé en ce que l'aplatissement de la courbe de température dans la phase de fonctionnement du brûleur est garanti par une réduction correspondante du courant volumétrique de l'eau de chauffage et/ou par une augmentation correspondante de la température de mise hors marche.

5. Procédé selon la revendication 1,
caractérisé en ce que lors d'une alimentation en chaleur pas suffisante à cause du courant volumétrique de l'eau de chauffage réduit pour obtenir la température aller exigée ou de la charge exigée, la température de mise en marche et/ou de mise hors marche du brûleur ou dans la phase finale du fonctionnement du brûleur le courant volumétrique de l'eau de chauffage est augmentée par-dessus de la valeur ajustée.

6. Procédé selon la revendication 1,
caractérisé en ce que par un circuit séparé, un nombre minimal d'allumages du brûleur est maintenu.

7. Procédé selon la revendication 1,
caractérisé en ce que l'ajustage du courant volumétrique de l'eau de chauffage se fait par une commande de la pompe de circulation et/ou de vérins dans l'installation de chauffage.
